(19) Europäisches Patentamt
European Patent Office
Office européen des brevets

(11) **EP 1 279 094 B1**

(12) **EUROPÄISCHE PATENTSCHRIFT**

(45) Veröffentlichungstag und Bekanntmachung des Hinweises auf die Patenterteilung:
**29.06.2005  Patentblatt 2005/26**

(21) Anmeldenummer: **01933602.3**

(22) Anmeldetag: **11.04.2001**

(51) Int Cl.⁷: $G06F\ 7/52$, $G06F\ 7/72$

(86) Internationale Anmeldenummer:
**PCT/DE2001/001438**

(87) Internationale Veröffentlichungsnummer:
**WO 2001/086412 (15.11.2001 Gazette 2001/46)**

(54) **VERFAHREN UND EINRICHTUNG ZUR MODULO-BERECHNUNG**

MODULO CALCULATION METHOD AND DEVICE

PROCEDE ET DISPOSITIF DE CALCUL MODULO

(84) Benannte Vertragsstaaten:
**AT BE CH CY DE DK ES FI FR GB GR IE IT LI LU MC NL PT SE TR**

(30) Priorität: **05.05.2000  DE 10021920**

(43) Veröffentlichungstag der Anmeldung:
**29.01.2003  Patentblatt 2003/05**

(73) Patentinhaber: **Infineon Technologies AG**
**81669 München (DE)**

(72) Erfinder:
  • **SCHMANDT, Bernd**
    **40878 Ratingen (DE)**
  • **WARMERS, Michael**
    **41812 Erkelenz (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**EP-A- 0 308 963     EP-A- 0 350 278**
**US-A- 5 572 454**

**Beschreibung**

Die Erfindung betrifft ein Datenverarbeitungsverfahren und eine Datenverarbeitungseinrichtung zur Durchführung einer Modulo-Berechnung.

In den verschiedensten Bereichen der Informations- und Kommunikationstechnologie spielt die Berechnung eines Rests R, der bei der Division einer ganzen Zahl A durch eine ganze Zahl B entsteht, eine wichtige Rolle. Die Operation zur Bestimmung des Rests R wird als Modulo-Operation bezeichnet und durch den mathematischen Ausdruck R = A mod B angegeben.

Ein spezielles Anwendungsgebiet, bei dem Modulo-Operationen in großer Zahl ausgeführt werden, betrifft das Frequenzsprungverfahren, das bei der Funksignal-Datenübertragung eingesetzt wird. Bei dem Frequenzsprungverfahren (frequency hopping) wird einer Dateneinheit (Datenpaket, Datenrahmen, usw.) eine bestimmte Sendefrequenz zugewiesen, welche eine Auswahl aus einer Liste von möglichen Sendefrequenzen ist. Die Anzahl der möglichen Sendefrequenzen ist durch einen Standard vorgegeben. Die Zuweisungsvorschrift wird durch eine Modulo-Operation realisiert, wobei A eine auf der Basis geeigneter Einflußgrößen berechnete Zahl und B die Gesamtzahl der verfügbaren Sendefrequenzen ist.

Auch in anderen Bereichen der Datenverarbeitung, wie beispielsweise der Ver- und Entschlüsselung von Information (Kryptographie), werden häufig Modulo-Operationen eingesetzt.

Modulo-Operationen bezüglich $B = 2^n$, wobei n eine ganze Zahl $\geq 1$ ist, können mittels eines einfachen Schieberegisters und einer Rechtsverschiebung des binärcodierten Zahlenwertes von A um n Stellen vorgenommen werden. Die bei der Rechtsverschiebung aus dem Schieberegister herausgeschobene Bitfolge ist der Rest R in binärer Zahlendarstellung. Modulo-Operationen bezüglich einer Zahl B, die keine Potenz zur Basis 2 ist, sind aufwendiger zu berechnen. Beispielsweise kann hierfür eine Zählerschaltung eingesetzt oder ein aufwandsgünstiger Rechenalgorithmus zur Division von A durch B verwendet werden.

Allgemein gilt, daß der Aufwand für die Berechnung des Restes R mit Zunahme des Wertebereichs von A und wachsender Zahlengröße von B zunimmt. Mit dem Begriff "Aufwand" kann dabei sowohl der zeitliche Programm-Abarbeitungs-Aufwand für die Durchführung der Berechnung als auch der materielle bzw. konstruktive Aufwand für die Realisierung der die Berechnung durchführenden Schaltung gemeint sein.

In der Schrift EP 0 308 963 A2 ist ein Verfahren zur Modulo-Berechnung beschrieben, bei welchem eine Zerlegung der Zahl A in Teilwörter einer Wortbreite > 1 vorgenommen wird und die Modulo-Berechnung anschließend im Rahmen einer Rekursion durchgeführt wird. Dabei wird in jedem Rekursionsschritt eine Neuzerlegung eines beim letzten Rekursionsschritt erhaltenen Zwischenergebnisses nach einer vorgegebenen Zerlegeanweisung durchgeführt.

In der Schrift US 5,572,454 ist ein Rekursionsverfahren beschrieben, das darauf abzielt, für bestimmte in einem Tabellenspeicher abgespeicherte Modulo-Ergebnisse gezielt einen Overflow bei der nachfolgenden Addition dieses Ergebnisses mit der Modulo-Zahl N zu erzeugen. Dieser Overflow kann in der weiteren Berechnung unberücksichtigt bleiben, weil er keinen Einfluss auf das Ergebnis der Modulo-Berechnung hat. Dadurch kann im Vergleich zu bekannten Modulo-Berechnungsverfahren ein Additionsschritt eingespart werden.

Der Erfindung liegt die Aufgabe zugrunde, ein aufwandsgünstiges Datenverarbeitungsverfahren zur Modulo-Berechnung und eine aufwandsgünstige Datenverarbeitungseinrichtung zur Berechnung der Modulo-Operation anzugeben. Das Datenverarbeitungsverfahren bzw. die Datenverarbeitungseinrichtung soll dabei gleichermaßen für Software- als auch Hardware-basierte Rechendurchführungen einsetzbar und insbesondere für große Wertebereiche von A und große Zahlenwerte von B geeignet sein.

Die Aufgabenstellung wird durch die Merkmale der unabhängigen Ansprüche gelöst.

Ein wesentlicher Gesichtspunkt der Erfindung besteht darin, daß zur Berechnung des Restes R ein Rekursionsverfahren eingesetzt wird, welches darauf beruht, daß eine gleichbleibende Berechnungsvorschrift (Funktion) wiederholt auf einen Ausdruck angewendet wird, der sich aus dem Ergebnis der letzten Anwendung der Berechnungsvorschrift und jeweils einem bestimmten Teilwort des die Zahl A repräsentierenden Datensymbol-Gesamtwortes ergibt. Durch die Zerlegung der Modulo-Berechnung in wiederholte Anwendungen derselben Berechnungsvorschrift kann die Komplexität der Berechnungsvorschrift als solche gering gehalten werden. Dies ermöglicht, die Berechnungsvorschrift mittels eines einfachen Algorithmus auszuführen bzw. die Realisierung einer einfach aufgebauten Hardware-Schaltung zur Ausführung der Berechnungsvorschrift.

Gemäß einem vorteilhaften Ausführungsbeispiel der Erfindung werden die Funktionswerte der Funktion bei jedem Rekursionsschritt aus einem einzigen Tabellenspeicher ausgelesen.

In diesem Fall muß ein den gesamten Wertebereich des Argumentes der Funktion abdeckender Tabellenspeicher eingesetzt werden.

Eine andere Möglichkeit besteht darin, mehrere Tabellenspeicher vorzusehen, wobei die in einem bestimmten Rekursionsschritt zu ermittelnden Funktionswerte jeweils nur aus einem bestimmten, diesem Rekursionsschritt zugeordneten Tabellenspeicher ausgelesen werden. Bei dieser Vorgehensweise wird ausgenutzt, daß das Argument der Funktion in den ersten Rekursionsschritten eine geringere Anzahl von Werten als bei späteren Rekursionsschritten (auch bei letzteren bleibt die Anzahl der Werte beschränkt) annehmen kann.

Die erfindungsgemäße Datenverarbeitungseinrichtung kann einen Mikrocomputer umfassen, der zur Abarbeitung eines das erfindungsgemäße Verfahren repräsentierenden Datenverarbeitungsprogramms ausgelegt ist. Eine andere vorteilhafte Ausgestaltung der Erfindung kennzeichnet sich dadurch, daß die Datenverarbeitungseinrichtung in Form eines Hardware-Schaltkreises ausgeführt ist, in welchem eine Funktionswerte-Ermittlungseinheit, ein Addierer und eine Verzögerungsstufe in einer Schaltungsschleife angeordnet sind.

Die Erfindung wird nachfolgend anhand von Ausführungsbeispielen unter Bezugnahme auf die Zeichnung näher erläutert; in dieser zeigt:

Fig. 1    ein vereinfachtes Flußdiagramm zur Erläuterung des erfindungsgemäßen Verfahrens;

Fig. 2    ein Blockschaltbild einer erfindungsgemäßen Datenverarbeitungseinrichtung mit einem Mikrocomputer;

Fig. 3    eine schematische Darstellung des Adressen-Wertebereichs eines Tabellenspeichers zur Erläuterung der in Fig. 2 gezeigten Funktionswerte-Ermittlungseinheit; und

Fig. 4    ein Blockschaltbild einer weiteren erfindungsgemäßen Datenverarbeitungseinrichtung in Form einer schnellen Hardware-Schaltung.

Die positive ganze Zahl A kann in einer Zahlendarstellung zur Basis p angegeben werden als:

$$A = a_{N-1} \cdot p^{N-1} + a_{N-2} \cdot p^{N-2} + ... + a_1 \cdot p^1 + a_0 \cdot p^0$$

Dabei bezeichnet p eine positive ganze Zahl, N bezeichnet die Anzahl der Stellen der Zahl A in der betreffenden Zahlendarstellung (N wird im folgenden als Wortbreite bezeichnet) und die Koeffizienten $a_{N-1}$, $a_{N-2}$, .., $a_0$ stellen die Ziffern bzw. Datensymbole der Zahl A dar.

Im folgenden wird zu Erläuterungszwecken eine Dualcode-Darstellung (p = 2) gewählt. Die Datensymbole $a_0$, $a_1$, .., $a_{N-1}$ sind in diesem Fall Bits. Die Erfindung umfaßt jedoch auch den Fall p ≠ 2, in welchem die Zahl A allgemein durch p-stufige Datensymbole dargestellt wird.

Die Dualcode-Darstellung der Zahl A mit einer Wortbreite N wird in Teilwörter einer vorgegebenen, identischen Wortbreite L zerlegt. Die Anzahl K der Teilwörter $W_0$, $W_1$, .., $W_{K-1}$ richtet sich nach den Wortbreiten N und L. Hat die Zahl A beispielsweise eine Wortbreite von N = 16 Bit, und wird L = 4 gewählt, umfaßt die Zerlegung des Datensymbolworts für die Zahl A vier Datensymbol-Teilwörter, nämlich

$$W_0 = a_3, a_2, a_1, a_0$$

$$W_1 = a_7, a_6, a_5, a_4$$

$$W_2 = a_{11}, a_{10}, a_9, a_8$$

$$W_3 = a_{15}, a_{14}, a_{13}, a_{12}$$

Das Teilwort $W_0$ hat eine Wertigkeit von $2^{0 \cdot 4}$, das Teilwort $W_1$ hat eine Wertigkeit von $2^{1 \cdot 4}$, das Teilwort $W_2$ hat eine Wertigkeit von $2^{2 \cdot 4}$, und die Wertigkeit des Teilwortes $W_3$ beträgt $2^{3 \cdot 4}$ (der allgemeine Ausdruck für die Wertigkeit des q-ten Teilwortes in einer Zahlendarstellung zur Basis p lautet $p^{q \cdot L}$).

Im folgenden wird mit $W_0$, $W_1$, $W_2$, $W_3$ auch der (Darstellungsunabhängige) Wert der einzelnen Teilwörter bezeichnet.

Die erfindungsgemäße Realisierung der Modulo-Berechnung nutzt die folgende mathematische Identität

$$A \bmod B = (W_3 \cdot 2^{3 \cdot 4} + W_2 \cdot 2^{2 \cdot 4} + W_1 \cdot 2^{1 \cdot 4} + W_0 \cdot 2^{0 \cdot 4}) \bmod B$$

$$= (((W_3 \cdot 2^4 + W_2) \cdot 2^4 + W_1) \cdot 2^4 + W_0) \bmod B$$

$$= C \bmod B$$

$$\text{mit } C = ((W_3 \cdot 2^4 \bmod B + W_2) \cdot 2^4 \bmod B + W_1) \cdot 2^4 \bmod B + W_0$$

sowie die Tatsache aus, daß dieser Ausdruck sich in aufwandsgünstiger Weise rekursiv errechnen läßt. Zu diesem Zweck wird eine Funktion

$$F(X) = X \cdot 2^4 \bmod B$$

definiert, wobei X, das Argument der Funktion F, eine ganze positive Zahl ist.

Es ist leicht erkennbar, daß sich die Funktion F im allgemeinen Fall in der Form

$$F(X) = X \cdot p^L \bmod B$$

angeben läßt. Das heißt, die Funktion F wird bei vorgegebener Zahlendarstellung (Basis p) durch die Wortbreite L der Datensymbol-Teilwörter und durch die Zahl B bestimmt.

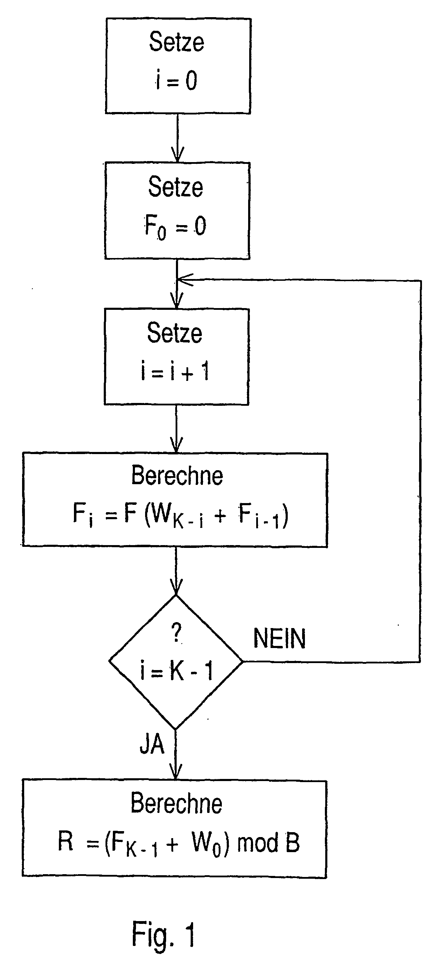

Die erfindungsgemäße Rekursion zur Berechnung des Ausdrucks A mod B wird anhand des in Fig. 1 dargestellten Flußdiagramms erläutert.

In dem Flußdiagramm sind übliche Initialisierungsschritte einer Datenverarbeitungseinrichtung zur Abarbeitung eines durch das Flußdiagramm veranschaulichten Datenverarbeitungsprogramms sowie Eingabeschritte für die Zahlen A und B weggelassen.

Zunächst wird der Rekursions-Schleifenindex i auf den Wert 0 gesetzt und es wird per Definition ein Funktionswert $F_0 = 0$ des nullten Rekursionsschrittes vorgegeben.

Die Rekursions-Schleife beginnt mit der Erhöhung des Schleifenindex i um den Wert 1, d.h. im ersten Schleifendurchlauf (erster Rekursionsschritt) ist i = 1.

In einem Rekursions-Berechnungsschritt wird der mit $F_i$ bezeichnete Funktionswert zu dem i-ten Rekursions-Schleifendurchlauf allgemein nach dem Ausdruck

$$F_i = F(W_{K-i} + F_{i-1})$$

errechnet.

Im ersten Schleifendurchlauf (i = 1) ergibt sich für das betrachtete Beispiel mit K = 4 der Ausdruck $F_1 = F(W_3)$. Da $W_3$ (genauso wie die anderen Teilwörter $W_0$, $W_1$, $W_2$) bei L = 4 lediglich 16 verschiedene Werte (nämlich 0 bis 15) annehmen kann, kann auch die Funktion F im ersten Schleifendurchlauf lediglich maximal 16 verschiedene Funktionswerte $F_1$ annehmen.

In einem nächsten Schritt wird geprüft, ob die Bedingung i = K - 1 erfüllt ist. Ist dies nicht der Fall, wird die Rekursionsschleife von neuem durchlaufen.

Demzufolge geht im betrachteten Beispiel (K = 4) der Rechenablauf in den zweiten Rekursions-Schleifendurchlauf über. Zunächst wird der Schleifenindex i inkrementiert, d.h. i = 2 gesetzt. Im nachfolgenden Rekursions-Berechnungsschritt wird der Funktionswert $F_2$ des zweiten Schleifendurchlaufs nach der bereits angegebenen Beziehung, d.h. bei K = 4 gemäß

$$F_2 = F(W_2 + F_1)$$

berechnet.

Die rekursive Funktionsberechnung wird nach diesem Schema fortgesetzt, bis die Bedingung i = K - 1 (d.h. im vorliegenden Beispiel i = 3) erfüllt ist. In diesem Fall verzweigt das Programm in einen Schluß-Berechnungsschritt, der nur ein einziges Mal ausgeführt wird. In dem Schluß-Berechnungsschritt wird der Rest R gemäß

$$R = (F_{K-1} + W_0) \bmod B$$

berechnet. Im betrachteten Beispiel entspricht dies der Berechnung R = $(F_3 + W_0)$ mod B.

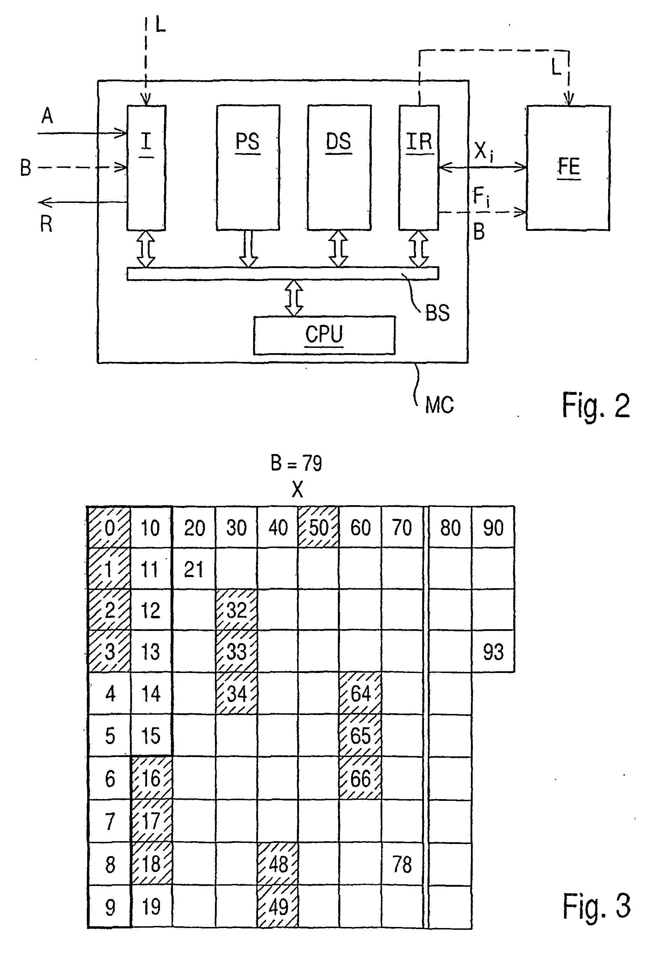

Fig. 2 zeigt in beispielhafter Weise den Aufbau einer ersten erfindungsgemäßen Datenverarbeitungseinrichtung. Die Datenverarbeitungseinrichtung umfaßt einen Prozessor CPU, der über ein Bussystem BS mit einem Programmspeicher PS und einem Datenspeicher DS in Datenaustauschverbindung steht. Ferner sind zum Datenaustausch mit einer Peripherie eine Eingabe-/Ausgabe-Schnittstelle I und eine weitere Schnittstelle IR vorgesehen. Letztere Schnittstelle IR steht mit einer Funktionswerte-Ermittlungseinheit FE in Datenaustauschverbindung. Die Einheiten CPU, PS, DS, I, IR können in Form eines Mikrocomputers MC realisiert sein.

Die Funktionsweise der dargestellten Datenverarbeitungseinrichtung ist wie folgt:

Über die Eingabe-/Ausgabe-Schnittstelle I wird der Datenverarbeitungseinrichtung die ganze Zahl A mitgeteilt. Falls die Einrichtung zur Modulo-Berechnung bezüglich einer variablen Zahl B ausgelegt ist, wird der Einrichtung über die Eingabe-/Ausgabe-Schnittstelle I auch die ganze Zahl B mitgeteilt. Optional kann auch die üblicherweise fest voreingestellte Wortbreite L über die Eingabe-/Ausgabe-Schnittstelle I verändert werden. Die Zahl A und gegebenenfalls die Zahlen B und/oder L werden im Datenspeicher DS abgespeichert.

In dem Programmspeicher PS ist ein Ablaufprogramm implementiert, das im wesentlichen den in Fig. 1 dargestellten Algorithmus umsetzt. Vor dem Start dieses Ablaufprogramms wird zunächst auf der Basis der erhaltenen Zahl A und der Wortbreite L der Datensymbol-Teilwörter die Anzahl der Schleifendurchläufe K ermittelt. Sie entspricht der Anzahl der Datensymbol-Teilwörter, die zur Darstellung der Zahl A benötigt werden.

Bei der Abarbeitung des Ablaufprogramms gemäß Fig. 1 wird das in dem aktuellen Rekursions-Schleifendurchlauf gerade benötigte Datensymbol-Teilwort aus dem Datenspeicher DS ausgelesen und Zwischenergebnisse der Berechnung (insbesondere der in dem aktuellen Rekursions-Schleifendurchlauf erhaltene Funktionswert $F_i$) in dem Datenspeicher DS abgespeichert.

In jedem Schleifendurchlauf wird von dem Mikroprozessor CPU das mit $X_i$ bezeichnete aktuelle Argument $X_i$ = $W_{K-i} + F_{i-1}$ der Funktion F berechnet und über die weitere Schnittstelle IR der Funktionswerte-Ermittlungseinheit FE mitgeteilt. Sofern die Funktionswerte-Ermittlungseinheit FE ausgelegt ist, Funktionswerte für unterschiedliche Zahlen B und ggf. L zu ermitteln, müssen dieser Einheit FE vor Entgegennahme des ersten Arguments $X_1$ auch die Zahlen B und L bekannt sein.

Die Funktionswerte-Ermittlungseinheit FE ermittelt in jedem Schleifendurchlauf den Funktionswert $F_i$ und teilt diesen dem Mikrocomputer MC mit.

Die Funktionswerte-Ermittlungseinheit FE kann auf verschiedene Weise realisiert sein. Denkbar ist beispielsweise, daß sie als einfache Logik-Rechenschaltung aufgebaut ist. Gemäß einer besonders bevorzugten Möglichkeit ist die Funktionswerte-Ermittlungseinheit FE jedoch als Tabellenspeicher ausgeführt, in dem Funktionswerte der Funktion F bezüglich der Zahlen B und L abgespeichert sind.

Sind B und L fest vorgegeben, ist der Inhalt eines solchen Tabellenspeichers ebenfalls vorbestimmt, d.h. der Tabellenspeicher kann als Festwertspeicher ROM ausgeführt sein.

Wenn B und/oder L nicht fest vorgegeben sind, besteht entweder die Möglichkeit, mehrere Tabellen-Festwertspeicher (ROM) einzusetzen oder als Tabellenspeicher einen Speicher mit veränderbarem Speicherinhalt (z.B. RAM oder EEPROM) zu verwenden. Im ersten Fall muß für jede mögliche Kombination eines Wertepaares (B,L) ein einzelner Tabellen-Festwertspeicher (ROM) verwendet werden, im zweiten Fall ist der Tabellenspeicher vor Beginn der Rekursionsberechnung entsprechend den Vorgabewerten B und L zu programmieren. Die Programmierung kann in Form eines Initialisierungsschrittes von dem Mikrocomputer MC durchgeführt werden, welcher zu diesem Zweck die Funktionswerte der Funktion F berechnet und in den Tabellenspeicher schreibt.

Betrachtet wird im folgenden z.B. eine Modulo-79-Operation (d.h. B = 79). Beispielsweise sind in dem Bluetooth-Standard für schnurlose Telefonie eine Modulo-79-Operation und eine Modulo-23-Operation zur Frequenzzuweisung in einem Frequenzsprungverfahren vereinbart. Fig. 3 verdeutlicht den maximalen Wertebereich für das Argument X, der aufgrund der rekursiven Anwendung der Funktion auftreten kann. Der maximale Wertebereich für das Argument X (der im Fall der Verwendung eines Tabellenspeichers für die Funktionswerte-Ermittlungseinheit FE dem Adressen-Wertebereich des Tabellenspeichers entspricht) erstreckt sich bei der Modulo-79-Operation von 0 bis 93. Dies ist darauf zurückzuführen, daß der im vorhergehenden Rekursions-Schleifendurchlauf berechnete Funktionswert $F_{i-1}$ gemäß der Definition der Funktion F stets $\leq 78$ ist und der zu $F_{i-1}$ zu addierende Wert von $W_{K-i}$ für alle i immer den Wertebereich 0 bis 15 umfaßt.

Das bedeutet, daß maximal 94 verschiedene Funktionswerte auftreten können, d.h. maximal 94 Speicherplätze benötigt werden.

Allgemein ergibt sich ein maximaler Wertebereich von X zwischen den Werten 0 und $B + p^L - 1$.

Der maximale Wertebereich des Arguments X wird bei den einzelnen Rekursionsdurchläufen jedoch nicht notwendigerweise ausgeschöpft. Für i = 1 kann das Argument $X_1$ wie bereits erwähnt lediglich die in Fig. 3 durch eine fette Umrandung kenntlich gemachten Werte 0 bis 15 annehmen. Das heißt, daß für den ersten Rekursionsdurchlauf i = 1 ein Tabellenspeicher mit einer Speichergröße von 16 Speicherplätzen, auf denen die zugehörigen Funktionswerte abgelegt sind, ausreicht.

Auch im zweiten Rekursionslauf kann das Argument $X_2$ nicht sämtliche Werte zwischen 0 und 93 annehmen.

Zur Erläuterung dieses Sachverhalts sind die möglichen Funktionswerte $F_1$, die die Funktion F im ersten Rekursionsschritt annehmen kann, in der Fig. 3 durch Schraffur hervorgehoben. Es sind dies die Werte 0 bis 3, 16 bis 18, 32 bis 34, 48 bis 50 und 64 bis 66. Da das Argument $X_2$ im zweiten Rekursionsdurchlauf durch die Beziehung $X_2$ = $W_2 + F_1$ bestimmt ist, ergibt sich für $X_2$ ein Wertebereich zwischen 0 und 81. Das heißt, daß für den zweiten Rekursionsdurchlauf i = 2 ein Tabellenspeicher mit einer Speichergröße von maximal 81 Speicherplätzen ausreicht.

Der bei den nachfolgenden Rekursionsdurchläufen auftretende Wertebereich des Arguments X kann in analoger Weise bestimmt werden.

Es besteht daher auch die Möglichkeit, für zumindest einige der Rekursionsdurchläufe, z.B. für i = 1, 2, einen eigenen Tabellenspeicher vorzusehen, der jeweils nur die für den betrachteten Rekursionsdurchlauf relevanten Funktionswerte enthält.

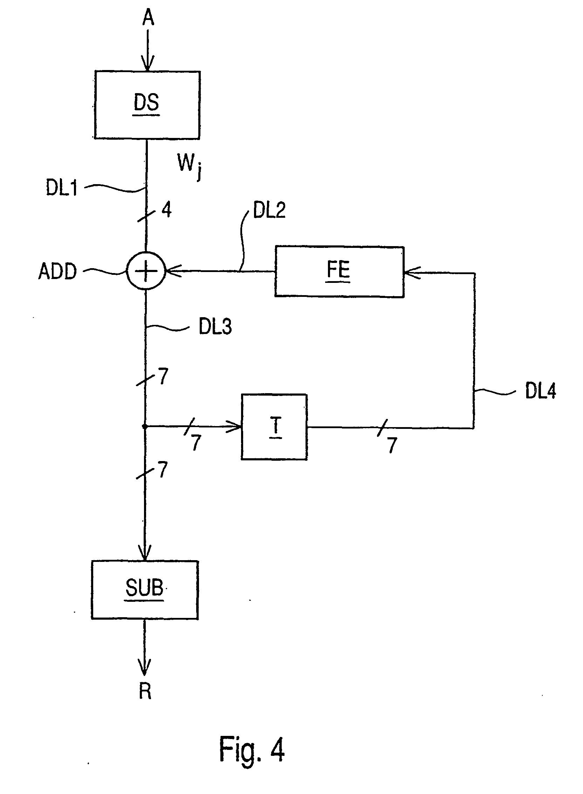

Die Fig. 4 zeigt eine weitere erfindungsgemäße Datenverarbeitungseinrichtung. Diese Datenverarbeitungseinrichtung ist in Form einer digitalen Hardware-Schaltung realisiert, die die Modulo-Berechnung ohne Abarbeitung eines Programms ausführt. Gleiche oder vergleichbare Bauteile wie in Fig. 2 sind mit denselben Bezugszeichen **gekennzeichnet**.

Die Hardware-Schaltung umfaßt einen Datenspeicher DS, einen Addierer ADD, eine Speicherzelle T, eine Funktionswerte-Ermittlungseinheit FE (vorzugsweise in Form eines Festwertspeichers), und einen Subtrahierer SUB.

Der Schaltungsaufbau korrespondiert mit dem in Fig. 1 erläuterten Algorithmus. Es wird im folgenden als Beispiel eine Zahl A betrachtet, die eine Wortbreite von N = 25 aufweist. In dem Datenspeicher DS wird die Zahl A dann in K = 7 Datensymbol-Teilwörter $W_j$, j = 0 bis K - 1, einer Wortbreite von L = 4 zerlegt.

Beginnend mit dem höchstwertigen Teilwort $W_6$ wird mit jedem Arbeitstakt ein Datensymbol-Teilwort $W_j$ über eine Datenleitung DL1 der Wortbreite 4 zu dem Addierer ADD geführt.

Der Addierer ADD summiert das aktuell zugeführte Datensymbol-Teilwort $W_j$ mit einem Funktionswert, der von der Funktionswerte-Ermittlungseinheit FE über eine Datenleitung DL2 der Wortbreite 7 bereitgestellt wird. Die Wortbreite von 7 Bit reicht aus, da der Funktionswert nicht größer als 93 werden kann.

Das über eine Datenleitung DL3 (Wortbreite ebenfalls 7 Bit) ausgegebene Additionsergebnis wird zunächst der Speicherzelle T zugeführt, von dieser um einen Takt verzögert und sodann über eine Datenleitung DL4 (Wortbreite 7 Bit) der Funktionswerte-Ermittlungseinheit FE zugeleitet.

Nach 7 Schleifendurchläufen liegt am Ausgang des Addierers ADD ein Ergebnis mit dem Wertebereich von 0 bis 93 vor.

Gemäß Fig. 1 muß dieses Ergebnis noch der abschließenden Modulo-79 Operation unterworfen werden. Da für Werte F im Bereich von 79 bis 93 gilt:

$$F \bmod 79 = F - 79$$

kann die Modulo-Operation auf eine einfache Subtraktion reduziert werden, welche von dem Subtrahierer SUB vorgenommen wird. Am Ausgang des Subtrahierers SUB steht der Rest R bereit.

Die in den Figuren 2 und 4 gezeigten Ausführungsbeispiele sind in geeigneter Weise kombinierbar. Beispielsweise kann auch die Hardware-Schaltung mit mehreren Tabellenspeichern ausgeführt und/oder für die Modulo-Berechnung bezüglich einer variablen Zahl B ausgelegt sein.

Die erfindungsgemäße Datenverarbeitungseinrichtung kann z.B. zur Steuerung der Sendefrequenz-Zuweisung beim Frequenzsprungverfahren in einem Funksender (z.B. für Schnurlos-Telefonie, Mobilfunk usw.) eingesetzt werden, wobei dem auszusendenden Funksignal eine Sendefrequenz in Abhängigkeit von dem von der Datenverarbeitungseinrichtung berechneten Rest R zugewiesen wird. Werden, wie im Bluetooth-Standard, zwei Modulo-Operationen (Modulo-79 und Modulo-23) eingesetzt, kann die Funktionswerte-Ermittlungseinheit FE im einfachsten Fall durch zwei Festwertspeicher(bereiche), die die entsprechenden Funktionswerte enthalten, realisiert sein.

**Patentansprüche**

1. Verfahren zur Steuerung der Sendefrequenz-Zuweisung bei einem Frequenzsprungverfahren in einem Funksender, wobei dem auszusendenden Funksignal eine Sendefrequenz in Abhängigkeit von einem Rest R, der sich bei der Division einer ganzen Zahl A durch eine vorgegebene ganze Zahl B ergibt, zugeordnet wird, wobei für die Berechnung des Restes von einer Darstellung der Zahl A durch ein Datensymbolwort zu einer Zahlenbasis p und einer vorab festgelegten Zerlegung des Datensymbolworts in eine Mehrzahl von Datensymbol-Teilwörtern $W_0$,

$W_1, .., W_{K-1}$ jeweils gleicher Wortbreite L ausgegangen wird, in dem

- in jedem i-ten Rekursionsschritt eine von der vorgegebenen Zahl B und der Wortbreite L abhängige Funktion $F(X_i) = X_i \cdot p^L$ mod B auf ein Argument $X_i$ angewendet wird, das die Summe des im vorhergehenden Rekursionsschritt erhaltenen Funktionswerts $F(X_{i-1})$ und eines dem betrachteten Rekursionsschritt zugeordneten Datensymbol-Teilworts $W_{K-i}$, d.h. $X_i = F(X_{i-1})+W_{K-i}$, ist, und zwar auch dann, wenn diese Summe eine Wortbreite größer als L aufweist.

**2.** Verfahren nach Anspruch 1,
**dadurch gekennzeichnet,**

- **daß** die Funktionswerte der Funktion (F) aus einem Tabellenspeicher (FE) ausgelesen werden.

**3.** Verfahren nach Anspruch 2,
**dadurch gekennzeichnet,**

- **daß** der Tabellenspeicher maximal $B + p^L - 1$ Speicherplätze benötigt, wobei p die Anzahl der Werte bezeichnet, die ein Datensymbol annehmen kann.

**4.** Verfahren nach Anspruch 1,
**dadurch gekennzeichnet,**

- **daß** die Funktionswerte der Funktion aus mehreren Tabellenspeichern ausgelesen werden, und
- **daß** ein bestimmter Tabellenspeicher einem bestimmten Rekursionsschritt zugeordnet ist.

**5.** Verfahren nach einem der vorhergehenden Ansprüche,
**dadurch gekennzeichnet,**

- **daß** die Ablaufsteuerung zur rekursiven Anwendung der Funktion durch einen Mikrocomputer (MC) erfolgt.

**6.** Verfahren nach einem der vorhergehenden Ansprüche,
**dadurch gekennzeichnet,**

- **daß** zur Durchführung des Datenverabeitungsverfahrens ein Hardware-Schaltkreis eingesetzt wird.

**7.** Verfahren nach einem der vorhergehenden Ansprüche,
**dadurch gekennzeichnet,**

- **daß** im Rahmen eines Frequenzsprungverfahrens einem auszusendenden Funksignal in Abhängigkeit von der berechneten Zahl R eine Sendefrequenz zugewiesen wird.

**8.** Datenverarbeitungseinrichtung zur Steuerung der Sendefrequenz-Zuweisung bei einem Frequenzsprungverfahren in einem Funksender, mit einem Zuordnungsmittel, welches dem auszusendenden Funksignal eine Sendefrequenz in Abhängigkeit von einem Rest R Zuordnet, der sich bei der Division einer ganzen Zahl A durch eine vorgegebene ganze Zahl B ergibt, wobei von einer Darstellung der Zahl A durch ein Datensymbolwort zu einer Zahlenbasis p und einer vorab festgelegten Zerlegung des Datensymbolworts in eine Mehrzahl von Datensymbol-Teilwörtern $W_0$, $W_1$, .., $W_{K-1}$ jeweils gleicher Wortbreite L ausgegangen wird, und wobei die Datenverarbeitungseinrichtung

- ausgelegt ist, in jedem i-ten Rekursionsschritt eine von der vorgegebenen Zahl B und der Wortbreite L abhängige Funktion $F(X_i) = X_i \cdot p^L$ mod B auf ein Argument $X_i$ anzuwenden, das die Summe des im vorhergehenden Rekursionsschritt erhaltenen Funktionswerts $F(X_{i-1})$ und eines dem betrachteten Rekursionsschritt zugeordneten Datensymbol-Teilworts $W_{K-i}$, d.h. $X_i = F(X_{i-1}) + W_{K-i}$, ist, und zwar auch dann, wenn diese Summe eine Wortbreite größer als L aufweist.

**9.** Datenverarbeitungseinrichtung nach Anspruch 8,
**gekennzeichnet durch**

- eine Funktionswerte-Ermittlungseinheit (FE) mit einem Eingang zur Entgegennahme des Arguments ($X_i$) und einem Ausgang zur Bereitstellung des bei der Anwendung der Funktion auf das Argument ermittelten Funktionswertes.

**10.** Datenverarbeitungseinrichtung nach Anspruch 9,
**dadurch gekennzeichnet,**

- **daß** die Funktionswerte-Ermittlungseinheit (FE) zur Berechnung der Funktionswerte von mehreren unterschiedlichen Funktionen ausgelegt ist und hierfür mehrere Tabellenspeicher umfaßt, wobei ein bestimmter Tabellenspeicher einer bestimmten Funktion, insbesondere einem bestimmten Wertepaar von B und L, zugeordnet ist.

**11.** Datenverarbeitungseinrichtung nach Anspruch 9,
**dadurch gekennzeichnet,**

- **daß** die Funktionswerte-Ermittlungseinheit (FE) mehrere Tabellenspeicher umfaßt, wobei ein bestimmter Tabellenspeicher einem oder mehreren bestimmten Rekursionsschritten zugeordnet ist.

**12.** Datenverarbeitungseinrichtung nach Anspruch 10 oder 11,
**dadurch gekennzeichnet,**

- **daß** die Datenverarbeitungseinrichtung einen Mikrocomputer (MC) umfaßt, der mit der Funktionswerte-Ermittlungseinrichtung (FE) in Datenaustauschverbindung steht.

**13.** Datenverarbeitungseinrichtung nach Anspruch 10 oder 11,
**dadurch gekennzeichnet,**

- **daß** die Datenverarbeitungseinrichtung einen Hardware-Schaltkreis umfaßt, in welchem die Funktionswerte-Ermittlungseinheit (FE), ein Addierer (ADD) und eine Verzögerungsstufe (T) in einer Schaltungsschleife angeordnet sind.

**14.** Datenverarbeitungseinrichtung nach einem der Ansprüche 9 bis 13,
**dadurch gekennzeichnet,**

- **daß** die Funktionswerte-Ermittlungseinheit (FE) bezüglich verschiedener Werte von B und/oder L programmierbar ist.

**Claims**

**1.** Method for controlling the transmit frequency allocation during a frequency hopping method in a radio transmitter, in which a transmit frequency is allocated to the radio signal to be emitted as a function of a remainder R that results during the division of an integer A by a prescribed integer B, the starting point for the calculation of the remainder being a representation of a number A by a data symbol word to a number basis p, and a previously determined decomposition of the data symbol word into a plurality of data symbol part-words $W_0$, $W_1$, .., $W_{K-1}$ of in each case identical word length L, in which

- in each i-th recursion step a function $F(X_i) = X_i \cdot p^L$ mod B dependent on the prescribed number B and the word length L is applied to an argument ($X_i$) that is the sum of the function value $F(X_{i-1})$ obtained in the preceding recursion step, and of a data symbol part-word $W_{K-i}$, i.e. $X_i = F(X_{i-1}) + W_{k-i}$, assigned to the recursion step considered, even if this sum has a word length greater than L.

**2.** Method according to Claim 1, **characterized in that** the values of the function (F) are read out from a table memory (FE).

**3.** Method according to Claim 2, **characterized in that** the table memory requires at most B + $p^L$ - 1 memory locations, p indicating the number of values that a data symbol can assume.

4. Method according to Claim 1, **characterized in that** the values of the function are read out from a plurality of table memories, and **in that** a specific table memory is assigned to a specific recursion step.

5. Method according to one of the preceding claims, **characterized in that** the sequencing control for recursive application of the function is performed by a microcomputer (MC).

6. Method according to one of the preceding claims, **characterized in that** a hardware circuit is used to carry out the data processing method.

7. Method according to one of the preceding claims, **characterized in that** in the course of a frequency hopping method a radio signal to be emitted is allotted a transmit frequency as a function of the calculated number R.

8. Data processing device for controlling the transmit frequency allocation during a frequency hopping method in a radio transmitter, with an assignment means which allocates a transmit frequency to the radio signal to be emitted as a function of a remainder R that results during the division of an integer A by a prescribed integer B, the starting point being a representation of the number A by a data symbol word to a number basis P, and a previously determined decomposition of the data symbol word into a plurality of data symbol part-words $W_0$, $W_1$, .., $W_{K-1}$ of in each case identical word length L, and in which the data processing device

   - is designed to apply a function $F(X_i) = X_i \cdot p^L \bmod B$ dependent on the prescribed number B and the word length L to an argument $X_i$ in each i-th recursion step, which argument is the sum of the function value $F(X_{i-1})$ obtained in the preceding recursion step, and of a data symbol part-word $W_{K-i}$, i.e. $X_i = F(X_{i-1}) + W_{k-i}$, assigned to the recursion step considered, even if this sum has a word length of greater than L.

9. Data processing device according to Claim 8, **characterized by** a function value determining unit (FE) with an input for accepting the argument ($X_i$), and an output for providing the function value determined during application of the function to the argument.

10. Data processing device according to Claim 9, **characterized in that** the function value determination unit (FE) is designed for calculating the values of a plurality of different functions and comprises for this purpose a plurality of table memories, a specific table memory being assigned to a specific function, in particular a specific value pair of B and L.

11. Data processing device according to Claim 9, **characterized in that** the function value determining unit (FE) comprises a plurality of table memories, a specific table memory being assigned to one or more specific recursion steps.

12. Data processing device according to Claim 10 or 11, **characterized in that** the data processing device comprises a microcomputer (MC) that is connected for exchanging data with the function value determining device (FE).

13. Data processing device according to Claim 10 or 11, **characterized in that** the data processing device comprises a hardware circuit in which the function value determining unit (FE), an adder (ADD) and a time-delay stage (T) are arranged in a circuit loop.

14. Data processing device according to one of Claims 9 to 13, **characterized in that** the function value determining device (FE) can be programmed with reference to different values of B and/or L.

**Revendications**

1. Procédé permettant de commander, dans le cas d'un procédé à sauts de fréquence, l'affectation de fréquences d'émission dans un émetteur radioélectrique, dans lequel une fréquence d'émission est associée au signal radioélectrique à émettre en fonction d'un reste R qui est obtenu en divisant un nombre entier A par un nombre entier prédéterminé B, dans lequel pour le calcul du reste on part d'une représentation du nombre A par un mot formant un symbole de données se rapportant à une base numérique p et d'une décomposition préalablement déterminée du mot formant un symbole de données en une pluralité de mots partiels formant des symboles de données $W_0$, $W_1$, ..., $W_{k-1}$ de même longueur L et dans lequel

   - à chaque $i^{ème}$ étape de récurrence, une fonction $F(X_i) = X_i p^L \bmod B$, qui dépend du nombre prédéterminé B et de la longueur L de mot, est appliquée à un argument $X_i$ qui est la somme de la valeur de la fonction $F(X_{i-1})$ obtenue dans l'étape de récurrence précédente et d'un mot partiel formant un symbole de données $W_{k-i}$ qui est associé à l'étape de récurrence considérée, c'est-à-dire $X_i = F(X_{i-1}) + W_{K-i}$, et cela même si cette somme a une longueur de mot supérieure à L.

**2.** Procédé selon la revendication 1, **caractérisé en ce que**

- les valeurs de la fonction (F) sont lues dans une mémoire de table (FE).

**3.** Procédé selon la revendication 2, **caractérisé en ce que**

- la mémoire de table nécessite au maximum $B + p^L - 1$ emplacements de mémoire, p désignant le nombre de valeurs que peut prendre un symbole de données.

**4.** Procédé selon la revendication 1, **caractérisé en ce que**

- les valeurs de la fonction sont lues dans plusieurs mémoires de table, et
- **en ce qu'**une mémoire de table déterminée est associée à une étape de récurrence déterminée.

**5.** Procédé selon l'une des revendications précédentes, **caractérisé en ce que**

- la commande de processus pour l'application récursive de la fonction est effectuée par un microordinateur (MC).

**6.** Procédé selon l'une des revendications précédentes, **caractérisé**

- **en ce que** un circuit fonctionnel matériel est utilisé pour mettre en oeuvre le procédé de traitement de données.

**7.** Procédé selon l'une des revendications précédentes, **caractérisé en ce que**

- dans le cadre d'un procédé de saut de fréquence, une fréquence d'émission est affectée à un signal radioélectrique en fonction du nombre R calculé.

**8.** Dispositif de traitement de données pour commander, dans le cas d'un procédé à saut de fréquence, l'affectation de fréquences d'émission dans un émetteur radioélectrique à l'aide d'un moyen d'affectation qui associe au signal radioélectrique à émettre une fréquence d'émission en fonction d'un reste R qui est obtenu en divisant un nombre entier A par un nombre entier prédéterminé B ; en partant d'une représentation du nombre A par un mot formant un symbole de données se rapportant à une base numérique p et d'une décomposition préalablement déterminée du mot formant un symbole de données en une pluralité de mots partiels formant des symboles de données $W_0$, $W_1$, ..., $W_{k-1}$ de même longueur L, et le dispositif de traitement de données

- est conçu pour appliquer à chaque $i^{ème}$ étape de récurrence une fonction $F(X_i) = X_i p^L$ mod B à un argument $X_i$ qui est la somme de la valeur de la fonction $F(X_{i-1})$ obtenue dans l'étape de récurrence considérée et d'un mot partiel formant un symbole de données $W_{k-i}$ qui est obtenu dans l'étape de récurrence considérée, c'est-à-dire $X_i = F(X_{i-1}) + W_{K-i}$, et cela même si cette somme a une longueur de mot supérieure à L.

**9.** Dispositif de traitement de données selon la revendication 8, **caractérisé**

- **par** une unité de détermination de valeurs de fonction (FE) comportant une entrée de réception de l'argument $(X_i)$ et une sortie de délivrance de la valeur de fonction déterminée lors de l'application de la fonction à l'argument.

**10.** Dispositif de traitement de donnés selon la revendication 9, **caractérisé en ce que**

- l'unité de détermination de valeurs de fonction (FE) est conçue pour calculer les valeurs de fonction de plusieurs fonctions différentes et comporte pour cela plusieurs mémoires de table, une mémoire de table déterminée étant associée à une fonction déterminée, en particulier à une paire de valeurs déterminée de B et de L.

**11.** Dispositif de traitement de données selon la revendication 9, **caractérisé en ce que**

- l'unité de détermination de valeurs de fonction (FE) comporte plusieurs mémoires de table, une mémoire de table déterminée étant associée à une ou plusieurs étapes de récurrence déterminées.

**12.** Dispositif de traitement de données selon la revendication 10 ou 11, **caractérisé en ce que**

- le dispositif de traitement de données comporte un microordinateur (MC) qui est en liaison d'échange de données avec l'unité de détermination de valeurs de fonction (FE).

**13.** Dispositif de traitement de données selon la revendication 10 ou 11, **caractérisé en ce que**

- le dispositif de traitement de données comporte un circuit matériel dans lequel sont placés l'unité de détermination de valeurs de fonction (FE), un additionneur (ADD) et un étage de retard (T) dans une boucle de circuit.

**14.** Dispositif de traitement de données selon l'une des revendications 9 à 13, **caractérisé en ce que**

- l'unité de détermination de valeurs de données (FE) est programmable par rapport à différentes valeurs de B et/ou de L.

Fig. 1

EP 1 279 094 B1

Fig. 2

B = 79

X

| 0 | 10 | 20 | 30 | 40 | 50 | 60 | 70 | 80 | 90 |
|---|----|----|----|----|----|----|----|----|----|
| 1 | 11 | 21 |    |    |    |    |    |    |    |
| 2 | 12 |    | 32 |    |    |    |    |    |    |
| 3 | 13 |    | 33 |    |    |    |    |    | 93 |
| 4 | 14 |    | 34 |    |    | 64 |    |    |    |
| 5 | 15 |    |    |    |    | 65 |    |    |    |
| 6 | 16 |    |    |    |    | 66 |    |    |    |
| 7 | 17 |    |    |    |    |    |    |    |    |
| 8 | 18 |    |    | 48 |    |    | 78 |    |    |
| 9 | 19 |    |    | 49 |    |    |    |    |    |

Fig. 3

13

Fig. 4